# EUROPEAN PATENT SPECIFICATION

(11) **EP 2 386 232 B1**
(45) Date of publication and mention of the grant of the patent: **26.06.2013**
(21) Application number: 11425127.5
(22) Date of filing: 06.05.2011
(51) Int. Cl.: A47J 37/00, A23N 12/08

(54) **Electric automatic machine for roasting chestnuts**
Elektrische automatische Maschine zum Rösten von Kastanien
Machine automatique électrique pour rôtir des marrons

(30) Priority: 11.05.2010 IT RM20100235
(43) Date of publication of application: 16.11.2011
(73) Proprietor: F&F Catalani s.r.l., 01038 Soriano nel Cimino (VT) (IT)
(72) Inventor: Catalani, Fulvio, 01038 Soriano nel Cimino (VT) (IT); Catalani, Fabrizio, 01038 Soriano nel Cimino (VT) (IT)
(74) Representative: Iannone, Carlo Luigi

(56) References cited:
- FR-A- 382 832
- GB-A- 191 507 954
- US-A- 2 220 749
- US-A- 5 960 561

## Description

The present invention relates to an electric automatic machine for roasting chestnuts.

More specifically, the invention relates to a machine of the above kind that can be used within public spaces without any problem both under hygienic and safety point of view.

As it is well known, apparatuses are used to roast chestnuts employing coal and/or gas, and they mainly are outdoor apparatuses, particularly due to problems that could derive from emission of vapor and smoke while cooking chestnuts.

Electric automatic machines suitably studied to permit cooking within public spaces, such as restaurants, do not exist.

Thus, the Applicant has studied and realized a machine for roasting chestnuts that can be used within closed spaces, without any problem due to emission of vapor and smoke during cooking or heating steps.

Furthermore, it is an object of the present invention that of providing a machine that can ensure optimum conditions to roast chestnuts.

These and other results are obtained according to the present invention by realizing an automatic machine for roasting chestnuts, requiring a reduced intervention by the operator, fulfilling all the safety requirements to be used within a closed space.

GB 07954 A describes an electric automatic machine for roasting chestnuts according to the pre-characterizing portion of claim 1.

It is therefore specific object of the present invention an electric automatic machine for roasting chestnuts, comprising a body, an element for supplying chestnuts from outside, means for sucking and cooking vapour condensation and recovering, and means for withdrawing roasted chestnuts, said body providing a cooking chamber, provided, at least on the above, with heating means, and of a container for cooking said chestnuts, provided a rotating arm for moving chestnuts, said chestnut supplying element being provided above said cooking chamber, said chestnut withdrawal means being provided under said cooking chamber and connected with the same by inner communication means, said machine being characterized in that it is provided with control and programming electronics, and in that said body provides an upper portion, with said heating means, and a lower portion, with the chestnut cooking chamber, said upper and lower portions being pivoted each other for inspection, maintenance and cleaning.

In a preferred embodiment of the machine according to the invention said heating means for cooking chestnuts are comprised of an electric resistance, provided on the upper portion of said cooking chamber.

Preferably, according to the invention, that said element for supplying chestnuts from outside is provided centrally above said body, centrally supplying chestnuts to the cooking chamber with respect to said heating means.

Particularly, according to the invention, said supply element can be comprised of a hemisphere, provided with at least one arm rotating the product, said arm being intermittently movable so as to shake the product heap contained within said hemisphere.

Furthermore, according to the invention, said sucking and cooking vapour condensation and recovery are provided in such a way to oblige vapour passing through said heating means.

Further, according to the invention, that said sucking and cooking vapour condensation and recovery can be comprised of a hole in correspondence of the product supply, and of a withdrawal system, provided within or outside the machine.

Particularly, in a preferred embodiment according to the invention, said sucking and condensation means can comprise a condensing device providing a sucking chamber, for inlet of vapor or gas, a sucking device, for sucking said vapor or gas and letting it passing through a passage path within said device, condensation means, for transforming said vapor or gas into liquid, and a reservoir for collecting the liquid so produced.

Further, according to the invention, said condensation means can comprise a first sucking conduct, having a first end, coupled with said sucking chamber, and a second end, a manifold, coupled on one side with said second end of said first conduct, and on the other side to a coil, within which gas or vapor is cooled, and a second sucking conduct, having a first end coupled with said coil, and a second end coupled with said sucking device.

Still according to the invention, said reservoir can have a signaling device to control level of contained liquid and in that it has a valve and a pipe union, and in that said valve controls said pipe union for discharging liquid.

Furthermore, according to the invention, a relevant hole can be provided along said first and/or second sucking conducts for introduction of detergents for cleaning said device.

Still according to the invention, said sucking chamber can have an annular shape and it can have holes for sucking gas or vapour, said hole being possibly provided on the upper portion of said condensation device.

Furthermore, according to the invention, said coil can be in the lower part of said condensation device and said sucking device can be in the upper part of said condensation device.

Preferably according to the invention, said means for withdrawal of roasted chestnuts are comprised of a manhole that can be automatically opened at the end of the cooking stage, and communicating with at least a storage and delivery drawer.

Particularly, according to the invention, two storage and delivery drawers are provided, means being provided for selectively communicating said manhole with one of said storage and delivery drawer.

Particularly, according to the invention, at least a drawer is heated, e.g. by electric resistances and like, suitable to maintain the roasted product warm.

Further, according to the invention, said rotating arm for moving chestnuts has a first shaping, suitable to confer to chestnuts a rolling movement during their movement.

Always according to the invention, said rotating arm for moving chestnuts provides a second shaping, on the side opposite to the side with the first shaping, so that, making the arm rotating in an direction opposite with respect to the rotation for moving chestnuts during cooking, permits discharging chestnuts.

Still according to the invention, pins are provided on lateral walls of the cooking container, in order to improve product rotation and levelling the same along product layers, particularly pins permitting rotation of said arms along both directions, or yieldable in the unloading direction and fixed in the mixing direction.

Particularly, two pins can be provided, the first one of which is close to the discharge manhole, and the second one in a lifted position.

Always according to the invention, said rotating arms are coated with a material improving its dragging features.

Finally, according to the invention, said machine provides a PLC.

Product that can be worked within the machine according to the invention is comprised of chestnuts with incised skin, or peeled chestnuts, possibly even pre-cooked or frozen.

The present invention will be now described for illustrative, but not limitative, purposes, according to preferred embodiments, with particular reference to the enclosed figures, wherein:
figure 1 is a first perspective view of a machine according to the invention in a first embodiment;
figure 2 is a second perspective view of machine according to figure 1;
figure 3 is a third perspective view of machine according to figure 1 with introduction door open;
figure 4 is a fourth perspective view of machine according to figure 1 with introduction door open;
figure 5 is a fifth perspective view of machine according to figure 1 with upper portion open;
figure 6 is a sixth perspective view of machine according to figure 1 with upper portion open;

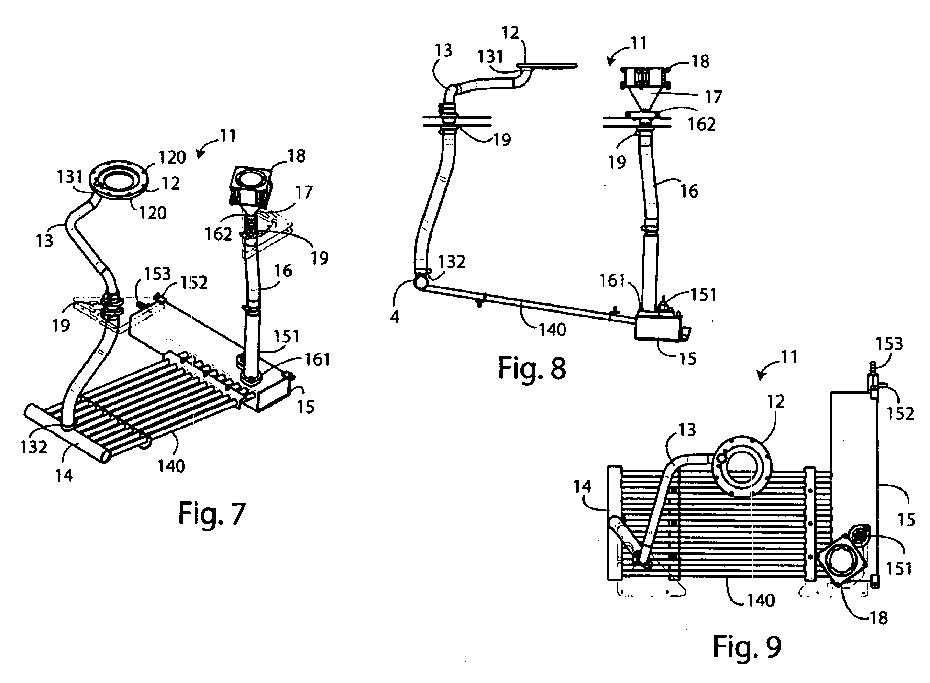

figure 7 is a perspective view of a condensation device of machine according to the invention in a second embodiment;
figure 8 is a lateral view of device of figure 7; and
figure 9 is a top view of device of figure 7.

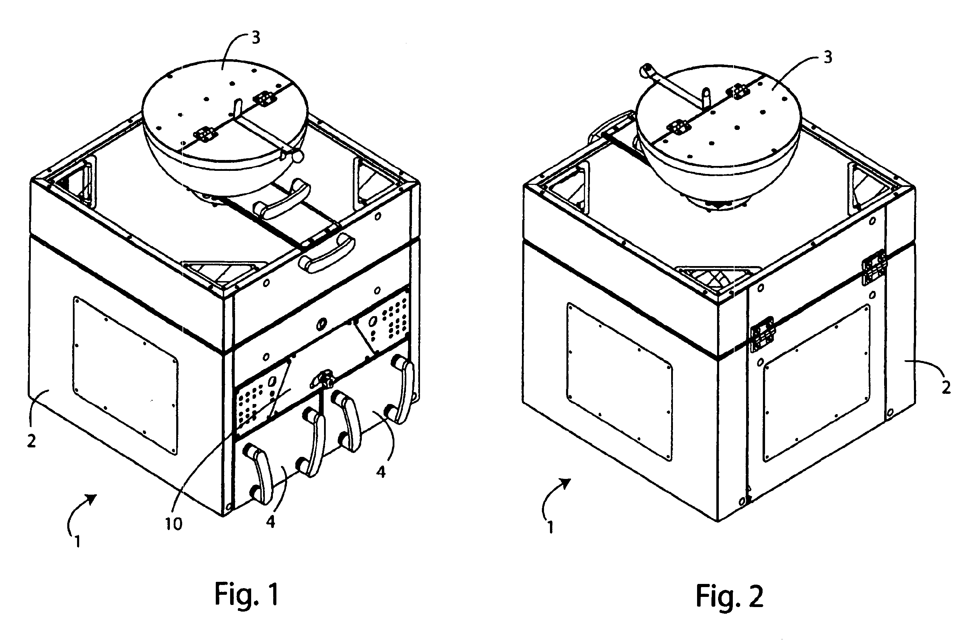

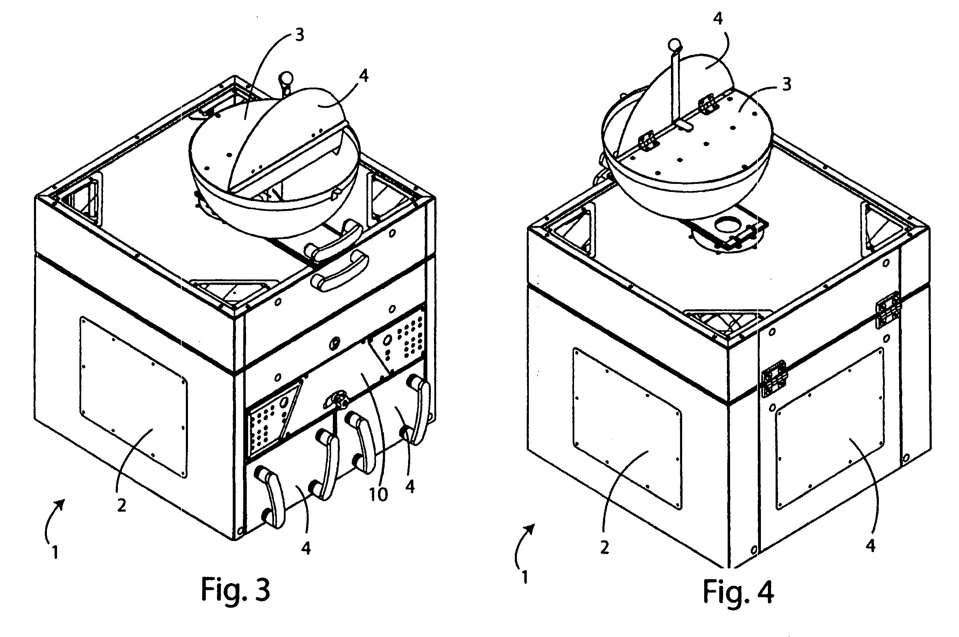

Observing first figures 1 - 6, it is shown a first embodiment of the machine according to the invention, generically indicated by reference number 1, comprising a cooking body 2 that will be described in greater detail in the following, a chestnut introduction element 3, and two drawers 4 for preserving and extracting roasted chestnuts.

As it can be easily understood from figures 1 and 2, machine 1 according to the invention is very compact, and all its parts involved in cooking chestnuts that are closed, thus preventing any environmental pollution problem, and limiting, if not completely avoiding, any risk for operator.

Element 3 for introduction of chestnuts is provided with an opening door 5, permitting an east introduction of the product from the above, and thus its closure while cooking.

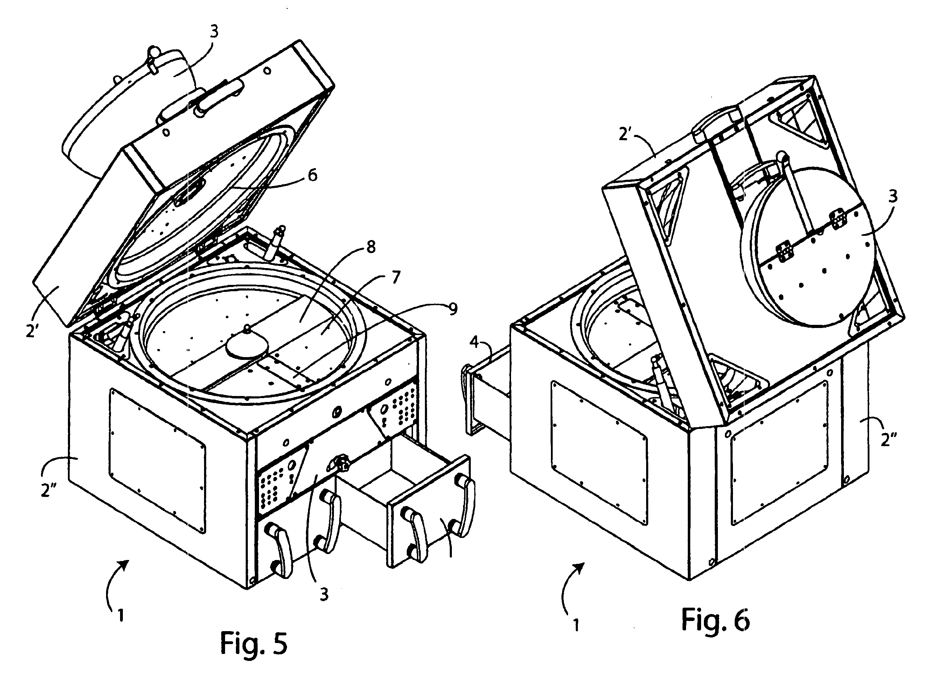

Coming now to observe figures 5 and 6, it is observed that body 2 has an upper portion 2', on which element 3 for introducing chestnuts is provided, pivoted on a lower portion 2", so that it permits access to the inside part of the machine for maintenance and repair purposes.

From figure 5 and 6, with the upper portion 2' lifted, it can be observed that, in this embodiment, a cooking resistance 6 is provided within that inner lower zone of the upper portion 2', so that container 7 within which chestnuts will be placed is fully free, with remarkable advantages for maintenance and repair purposes.

A rotating arm 8 is provided within said container 7, to move chestnuts while cooking so as to obtain a uniform cooking.

As it can be observed from figure 5, blades of arm 8 are so shaped to cause a rotation of chestnuts while cooking, thus further optimising cooking.

By reference number 9, it is indicated an overturning door permitting discharging chestnuts at the end of roasting cycle.

Properly roasted chestnuts are discharged within one of the two drawers, maintaining them hot until eaten, e.g. by an electric resistance. A bulkhead 10 is provided above said drawers 4, that can be displaced laterally so as to select drawer 4 within which roasted chestnuts can be discharged.

Heat source is based, in the described machine, on heating an electric resistance 6, provided, as already said, on the upper portion of the cooking chamber. Thus, vapour is obliged to pass through a very high temperature zone before being extracted through element 3, so that it is no more visible.

By positioning resistance 6 above the product, a chestnut roasting by infrared irradiation is obtained, thus reducing time required for cooking.

Outside central inlet prevents necessity of opening cooking chamber, thus avoiding any risk of burning operators.

Mixing effect obtained by arm 8 improves quality of cooking. Arm 8 also has the function of discharging chestnuts, simply inverting its rotation, and this thanks to its shaping.

Discharge door 9 is automatically activated at the end of cooking.

Thus, machine 1 is completely automatic, with a much reduced intervention by operator that only has to introduce and withdraw the product.

In a second embodiment, said machine 1 provides a condensation device 11, comprising an annular sucking chamber 12, a first sucking conduct 13, a manifold 14, a coil 140 for cooling vapour, a reservoir 15 for collecting condensate, a second sucking conduct 16 and a sucking device 18.

Annular sucking chamber 12 is in the upper portion of said condensation device 11 and in correspondence of the opening of the roasting machine 1. Said sucking chamber 12 has, all along its outer surface, holes 120 for sucking vapour and it is connected to a first end 131 of the first sucking conduct 13. Said first sucking conduct 13 has a mainly vertical extension and it is connected to said manifold 14 to its second end 132.

Said manifold 14 is in a lower position on roasting machine 1, and it is connected to the cooling coil 140, having a mainly horizontal extension, and connected with the reservoir 15.

Said reservoir 15 has a signalling device 151 to control the level of contained condensate, indicating maximum amount that can be introduced within the reservoir. Further, said reservoir 15 has a manfully or electrically operated valve 152 controlling pipe union 153 for discharging condensate.

Second sucking conduct 16 with a mainly vertical extension is connected, by its first end, on said reservoir 15, said conduct 16 ending with a conical opening 17 on its second end 162. Said conical opening 17 has its larger base in correspondence of the sucking device 18.

In present embodiment, sucking device 18 is in the upper part of the roasting machine 1.

In order to permit a periodical cleaning of condensation device 11, hoes 19 are provided along first 13 and second 16 sucking conducts.

Operation mode of the above condensation device 11 will be described in the following, with reference to cooking or heating operations.

Sais mode according to the invention occurs as follows:
a. suction of vapour produced within the roasting machine 1 through holes 120 of sucking chamber;
b. vapour cooling making it passing through first sucking conduct 13, being to cooled by horizontal air flow at room temperature generated by cooling system (not shown) of machine 1;
c. vapour expansion and further cooling passing the same through cooling coil 140;
d. introduction within reservoir 15, and further vapour expansion and cooling, also due to lick surface of liquid already settled;
e. further condensate releasing through passage for second sucking conduct 16;
f. passage of conical opening 17 and consequent quick expansion with consequent temperature lowering;
g. passage through sucking device 18, promoting coalescence of residual vapour droplets by centrifugal force due to axial sucking.

By the above method, it is possible varying efficiency of condensation device 11 by varying suction rate.

Cooling of first sucking conduct 13, of cooling coil 140 and of reservoir 15 is generated by air flow at room temperature sucked from the bottom by cooling system of machine 1.

Cleaning of the system is allowed by introducing water and/or detergent liquid through holes 19 of first and second sucking conducts that can be reached by opening roasting machine 1 element 3. By opening condensate discharge valve 152, clearing liquid is removed.

The present invention has been described for illustrative, but not limitative, purposes, according to its preferred embodiments, but it is to be understood that variations and/or modification can be introduced by those skilled in the art, without departing from the relevant scope, as defined in the enclosed claims.

## Claims

1. Electric automatic machine (1) for roasting chestnuts, comprising a body (2), an element (3) for supplying chestnuts from outside, means for sucking and cooking vapour condensation and recovering, and means (4) for withdrawing roasted chestnuts, said body (2) providing a cooking chamber, provided, at least on the above, with heating means (6), and of a container for cooking said chestnuts, provided a rotating arm (8) for moving chestnuts, said chestnut supplying element (3) being provided above said cooking chamber, said chestnut withdrawal means (4) being provided under said cooking chamber and connected with the same by inner communication means, said machine (1) being **characterized in that** it is provided with control and programming electronics and **in that** said body (2) provides an upper portion (2'), with said heating means(6), and a lower portion (2"), with the chestnut cooking chamber, said upper (2') and lower (2") portions being pivoted each other for inspection, maintenance and cleaning.

2. Machine according to claim 1, **characterised in that** said heating means for cooking chestnuts are comprised of an electric resistance, provided on the upper portion of said cooking chamber.

3. Machine according to one of the preceding claims, **characterised in that** said element for supplying chestnuts from outside is provided centrally above said body, centrally supplying chestnuts to the cooking chamber with respect to said heating means.

4. Machine according to one of the preceding claims, **characterised in that** said supply element can be comprised of a hemisphere, provided with at least one arm rotating the product, said arm being intermittently movable so as to shake the product heap contained within said hemisphere.

5. Machine according to one of the preceding claims, **characterised in that** said sucking and cooking vapour condensation and recovery are provided in such a way to oblige vapour passing through said heating means.

6. Machine according to one of the preceding claims, **characterised in that** said sucking and cooking vapour condensation and recovery can be comprised of a hole in correspondence of the product supply, and of a withdrawal system, provided within or outside the machine.

7. Machine according to one of the preceding claims, **characterised in that** said sucking and condensation means comprise a condensing device providing a sucking chamber, for inlet of vapor or gas, a sucking device, for sucking said vapor or gas and letting it passing through a passage path within said device, condensation means, for transforming said vapor or gas into liquid, and a reservoir for collecting the liquid so produced.

8. Machine according to claim 7, **characterised in that** said condensation means comprise a first sucking conduct, having a first end, coupled with said sucking chamber, and a second end, a manifold, coupled on one side with said second end of said first conduct, and on the other side to a coil, within which gas or vapor is cooled, and a second sucking conduct, having a first end coupled with said coil, and a second end coupled with said sucking device.

9. Machine according to claim 8, **characterised in that** said reservoir has a signaling device to control level of contained liquid and **in that** it has a valve and a pipe union, and **in that** said valve controls said pipe union for discharging liquid.

10. Machine according to one of the preceding claims 8 - 9, **characterised in that** a relevant hole is provided along said first and/or second sucking conducts for introduction of detergents for cleaning said device.

11. Machine according to one of the preceding claims 8-10, **characterised in that** said sucking chamber has an annular shape and it can have holes for sucking gas or vapour, said hole being possibly provided on the upper portion of said condensation device.

12. Machine according to one of the preceding claims 8-11, **characterised in that** said coil is in the lower part of said condensation device and said sucking device can be in the upper part of said condensation device.

13. Machine according to one of the preceding claims, **characterised in that** said means for withdrawal of roasted chestnuts are comprised of a manhole that can be automatically opened at the end of the cooking stage and communicating with at least a storage and delivery drawer.

14. Machine according to claim 13, **characterised in that** two storage and delivery drawers are provided, means being provided for selectively communicating said manhole with one of said storage and delivery drawer.

15. Machine according to one of the preceding claims 13-14, **characterised in that** said at least a drawer is heated, e.g. by electric resistances and like, suitable to maintain the roasted product warm.

16. Machine according to one of the preceding claims, **characterised in that** said rotating arm for moving chestnuts has a first shaping, suitable to confer to chestnuts a rolling movement during their movement.

17. Machine according to claim 15, **characterised in that** said rotating arm for moving chestnuts provides a second shaping, on the side opposite to the side with the first shaping, so that, making the arm rotating in an direction opposite with respect to the rotation for moving chestnuts during cooking, permits discharging chestnuts.

18. Machine according to one of the preceding claims, **characterised in that** pins are provided on lateral walls of the cooking container, in order to improve product rotation and levelling the same along product layers, particularly pins permitting rotation of said arms along both directions, or yieldable in the unloading direction and fixed in the mixing direction.

19. Machine according to claim 18, **characterised in that** two pins are provided, the first one of which is close to the discharge manhole, and the second one in a lifted position.

20. Machine according to one of the preceding claims, **characterised in that** said rotating arms are coated with a material improving its dragging features.

21. Machine according to one of the preceding claims, **characterised in that** said machine provides a PLC.

22. Machine according to one of the preceding claims, **characterised in that** said product is comprised of chestnuts with incised skin, or peeled chestnuts, possibly even pre-cooked or frozen.

## Patentansprüche

1. Elektrische automatische Maschine (1) zum Rösten von Kastanien umfassend einen Körper (2), ein Element (3) zum Bereitstellen von Kastanien von Außen, Mittel zum Ansaugen und Kochen von Dampfkondensation und zum Auffangen, und Mittel (4) zur Entnahme von gerösteten Kastanien, wobei der Körper (2) eine Kochkammer bereitstellt, die zumindest an der Oberseite mit Heizmitteln (6) versehen ist, und einen Behälter zum Kochen der Kastanien, versehen mit einem drehbaren Arm (8) zum Bewegen der Kastanien, wobei das Element zum Bereitstellen der Kastanien (3) oberhalb der Kochkammer vorgesehen ist, wobei das Mittel (4) zur Entnahme der Kastanie unter der Kochkammer vorgesehen und mit der selben durch innere Verbindungsmittel verbunden ist, wobei die Maschine (1) **dadurch gekennzeichnet ist, dass** sie mit Steuer- und Programmierelektronik versehen ist und dass der Körper (2) einen oberen Abschnitt (2') mit den Heizmitteln (6) und einen unteren Abschnitt (2'') mit der Kastanienkochkammer vorsieht, wobei der obere (2') und der untere (2'') Abschnitt relativ zueinander zur Inspektion, Wartung und Reinigung geschwenkt werden.

2. Maschine gemäß Anspruch 1, **dadurch gekennzeichnet, dass** das Heizmittel zum Kochen der Kastanien aus einem elektrischen Widerstand besteht, der auf dem oberen Abschnitt der Kochkammer vorgesehen ist.

3. Maschine gemäß einem der vorangehenden Ansprüche, **dadurch gekennzeichnet, dass** das Element zum Bereitstellen von Kastanien von außen mittig oberhalb des Körpers vorgesehen ist und die Kastanien mittig an die Kochkammer liefert in Bezug auf die Heizmittel.

4. Maschine gemäß einem der vorangehenden Ansprüche, **dadurch gekennzeichnet, dass** das Bereitstellungsmittel aus einer Halbkugel bestehen kann, die mit mindestens einem Arm versehen ist, der das Produkt rotiert, wobei der Arm periodisch beweglich ist, um die innerhalb der Halbkugel enthaltene Produktmenge zu schütteln.

5. Maschine gemäß einem der vorangehenden Ansprüche, **dadurch gekennzeichnet, dass** das Saugen und Kochen von Dampfkondensation und das Wiedergewinnen in einer solchen Weise erfolgt, um Dampf dazu zu zwingen, durch die Heizmittel hindurch zu treten.

6. Maschine gemäß einem der vorangehenden Ansprüche, **dadurch gekennzeichnet, dass** das Ansaugen und Kochen von Dampfkondensation und Wiedergewinnen bestehen kann aus einem Loch in Korrespondenz zu der Produktzulieferung, und einem Entnahmesystem, das innerhalb oder außerhalb der Maschine vorgesehen ist.

7. Maschine gemäß einem der vorangehenden Ansprüche, **dadurch gekennzeichnet, dass** die Ansaug- und Kondensationsmittel ein Kondensiergerät aufweisen, das eine Ansaugkammer zum Einlass von Dampf oder Gas, ein Ansauggerät zum Ansaugen des Dampfs oder des Gases und zum Passieren lassen durch einen Passagepfad innerhalb des Gerätes, Kondensationsmittel zur Transformation des Dampfs oder des Gases in eine Flüssigkeit, und ein Reservoir zum Sammeln der so produzierten Flüssigkeit aufweist.

8. Maschine gemäß Anspruch 7, **dadurch gekennzeichnet, dass** die Kondensationsmittel aufweisen: Eine erste Ansaugleitung mit einem mit der Ansaugkammer verbundenen ersten Ende und einem zweiten Ende, ein Anschlussstück, das an einer Seite mit dem zweiten Ende der ersten Leitung und an der anderen Seite mit einer Windung verbunden ist, innerhalb derer Gas oder Dampf gekühlt wird, und einer zweiten Ansaugleitung mit einem mit der Windung verbundenen ersten Ende und einem zweiten Ende, das mit dem Ansauggerät verbunden ist.

9. Maschine gemäß Anspruch 8, **dadurch gekennzeichnet, dass** das Reservoir ein Anzeigegerät aufweist, um den Pegel der enthaltenen Flüssigkeit zu steuern, und dass sie ein Ventil und eine Rohrverbindung aufweist, und dass das Ventil die Rohrverbindung zur Flüssigkeitsabgabe steuert.

10. Maschine gemäß einem der vorangehenden Ansprüche 8-9, **dadurch gekennzeichnet, dass** ein erhebliches Loch entlang der ersten und/oder zweiten Ansaugleitung vorgesehen ist zur Einführung von Reinigungsmitteln zum Reinigen des Geräts.

11. Maschine gemäß einem der vorangehenden Ansprüche 8-10, **dadurch gekennzeichnet, dass** die Ansaugkammer eine Ringform hat und Löcher zum Ansaugen von Gas oder Dampf aufweisen kann, wobei das Loch möglicherweise auf dem oberen Abschnitt des Kondensationsgeräts vorgesehen ist.

12. Maschine gemäß einem der vorangehenden Ansprüche 8-11, **dadurch gekennzeichnet, dass** die Windung in dem unteren Abschnitt des Kondensationsgeräts vorgesehen ist und das Ansauggerät in dem oberen Teil des Kondensationsgeräts sein kann.

13. Maschine gemäß einem der vorangehenden Ansprüche, **dadurch gekennzeichnet, dass** die Mittel zur Entnahme der gerösteten Kastanien aus einem Loch bestehen, das am Ende der Kochphase automatisch geöffnet werden kann und in Verbindung steht mit einem der Lager- und Lieferschubfächer.

14. Maschine gemäß Anspruch 13, **dadurch gekennzeichnet, dass** zwei Lager- und Lieferfächer vorgesehen sind, dass Mittelvorgesehen zum selektiven Verbinden des Loches mit einem der Lager- und Lieferfächer.

15. Maschine gemäß einem der vorangehenden Ansprüche 13-14, **dadurch gekennzeichnet, dass** das mindestens eine Schubfach beheizt ist, z.B. durch elektrische Widerstände und dergleichen, in geeigneter Weise, um das gerostete Produkt warm zu halten.

16. Maschine gemäß einem der vorangehenden Ansprüche, **dadurch gekennzeichnet, dass** der drehbare Arm zum Bewegen der Kastanien eine erste Form aufweist, die geeignet ist, um den Kastanien eine Rollbewegung während ihrer Bewegung zu vermitteln.

17. Maschine gemäß Anspruch 15, **dadurch gekennzeichnet, dass** der drehbare Arm zum Bewegen der Kastanien eine zweite Form aufweist auf der Seite gegenüber der Seite mit der ersten Form, so dass eine Veranlassung zum Drehen des Arms in einer Richtung entgegengesetzt der Richtung zum Bewegen der Kastanien während des Kochens eine Abgabe der Kastanien erlaubt.

18. Maschine gemäß einem der vorangehenden Ansprüche, **dadurch gekennzeichnet, dass** Stifte vorgesehen sind auf Seitenwänden des Kochbehälters, um die Produktrotation zu verbessern und die selbe entlang Produktschichten auszugleichen, insbesondere Stifte, die eine Rotation der Arme in beiden Richtungen erlauben oder die in der Entladerichtung nachgiebig und in der Mischrichtung fixiert sind.

19. Maschine gemäß Anspruch 18, **dadurch gekennzeichnet, dass** zwei Stifte vorgesehen sind, von denen der erste nahe des Entnahmelochs und der zweite in einer angehobenen Position ist.

20. Maschine gemäß einem der vorangehenden Ansprüche, **dadurch gekennzeichnet, dass** die rotierenden Arme mit einem Material beschichtet sind, das seine Mitnahmeeigenschaften verbessert.

21. Maschine gemäß einem der vorangehenden Ansprüche, **dadurch gekennzeichnet, dass** die Maschine eine speicherprogrammierbare Steuerung vorsieht.

22. Maschine gemäß einem der vorangehenden Ansprüche, **dadurch gekennzeichnet, dass** das Produkt aus Kastanien mit einer eingeschnittenen Haut oder geschälten Kastanien besteht, möglicherweise sogar vorgekocht oder gefroren.

## Revendications

1. Machine automatique électrique (1) pour rôtir des châtaignes, comprenant un corps (2), un élément (3) pour délivrer des châtaignes à partir de l'extérieur, des moyens pour la condensation et la récupération de vapeur d'aspiration et de cuisson, et des moyens (4) pour retirer des châtaignes rôties, ledit corps (2) constituant une chambre de cuisson, munie, au moins au-dessus, de moyens chauffants (6), et d'un récipient pour cuire lesdites châtaignes, muni d'un bras rotatif (8) pour déplacer les châtaignes, ledit élément de délivrance de châtaignes (3) étant disposé au-dessus de ladite chambre de cuisson, lesdits moyens de retrait de châtaignes (4) étant disposés en dessous de ladite chambre de cuisson et reliés à celle-ci par des moyens de communication intérieurs, ladite machine (1) étant **caractérisée en ce qu'**elle est munie de circuits électroniques de commande et de programmation, et **en ce que** ledit corps (2) constitue une partie supérieure (2'), avec lesdits moyens chauffants (6), et une partie inférieure (2"), avec la chambre de cuisson de châtaignes, lesdites parties supérieure (2') et inférieure (2") pouvant pivoter l'une par rapport à l'autre pour l'inspection, la maintenance et le nettoyage.

2. Machine selon la revendication 1, **caractérisée en ce que** lesdits moyens chauffants pour cuire des châtaignes sont constitués par une résistance électrique, disposée sur la partie supérieure de ladite chambre de cuisson.

3. Machine selon l'une des revendications précédentes, **caractérisée en ce que** ledit élément pour délivrer des châtaignes à partir de l'extérieur est disposé de façon centrale au-dessus dudit corps, délivrant de façon centrale des châtaignes à la chambre de cuisson par rapport auxdits moyens chauffants.

4. Machine selon l'une des revendications précédentes, **caractérisée en ce que** ledit élément de délivrance peut être constitué par un hémisphère, muni d'au moins un bras faisant tourner le produit, ledit bras pouvant bouger par intermittence de façon à secouer le tas de produit contenu à l'intérieur dudit hémisphère.

5. Machine selon l'une des revendications précédentes, **caractérisée en ce que** ladite condensation et ladite récupération de vapeur d'aspiration et de cuisson sont réalisées de façon à obliger la vapeur à traverser lesdits moyens chauffants.

6. Machine selon l'une des revendications précédentes, **caractérisée en ce que** ladite condensation et ladite récupération de vapeur d'aspiration et de cuisson peuvent être réalisées par un trou en correspondance avec l'alimentation en produit, et un système d'extraction, disposé à l'intérieur ou à l'extérieur de la machine.

7. Machine selon l'une des revendications précédentes, **caractérisée en ce que** lesdits moyens d'aspiration et de condensation comprennent un dispositif de condensation muni d'une chambre d'aspiration, pour l'entrée de vapeur ou de gaz, d'un dispositif d'aspiration, pour aspirer ladite vapeur ou ledit gaz et le faire passer à travers un trajet de passage à l'intérieur dudit dispositif, de moyens de condensation, pour transformer ladite vapeur ou ledit gaz en liquide, et d'un réservoir pour collecter le liquide ainsi produit.

8. Machine selon la revendication 7, **caractérisée en ce que** lesdits moyens de condensation comprennent un premier conduit d'aspiration, comportant une première extrémité, couplée à ladite chambre d'aspiration, et une deuxième extrémité, un manifold, couplé d'un côté à ladite deuxième extrémité dudit premier conduit, et de l'autre côté à un serpentin, à l'intérieur duquel le gaz ou la vapeur est refroidi, et un deuxième conduit d'aspiration, comportant une première extrémité couplée audit serpentin, et une deuxième extrémité couplée audit dispositif d'aspiration.

9. Machine selon la revendication 8, **caractérisée en ce que** ledit réservoir comporte un dispositif de signalisation pour contrôler le niveau de liquide contenu, et **en ce qu'**elle comporte une vanne et un raccord de tuyaux, et **en ce que** ladite vanne commande ledit raccord de tuyaux de façon à décharger du liquide.

10. Machine selon l'une des revendications 8 à 9 qui précèdent, **caractérisée en ce qu'**un trou correspondant est situé le long desdits premier et/ou deuxième conduits d'aspiration pour l'introduction de détergents pour nettoyer ledit dispositif.

11. Machine selon l'une des revendications 8 à 10 qui précèdent, **caractérisée en ce que** ladite chambre d'aspiration a une forme annulaire et **en ce qu'**elle peut comporter des trous pour aspirer du gaz ou de la vapeur, ledit trou étant éventuellement situé sur la partie supérieure dudit dispositif de condensation.

12. Machine selon l'une des revendications 8 à 11 qui précèdent, **caractérisée en ce que** ledit serpentin se trouve dans la partie inférieure dudit dispositif de condensation et **en ce que** ledit dispositif d'aspiration peut se trouver dans la partie supérieure dudit dispositif de condensation.

13. Machine selon l'une des revendications précédentes, **caractérisée en ce que** lesdits moyens pour le retrait de châtaignes rôties sont constitués par un trou d'homme qui peut être ouvert automatiquement à la fin de l'étape de cuisson, et communiquant avec au moins un tiroir de stockage et de délivrance.

14. Machine selon la revendication 13, **caractérisée en ce que** deux tiroirs de stockage et de délivrance sont disposés, des moyens étant disposés de façon à faire communiquer de façon sélective ledit trou d'homme avec l'un desdits tiroirs de stockage et de délivrance.

15. Machine selon l'une des revendications 13 à 14 qui précèdent, **caractérisée en ce que** ledit tiroir au nombre d'au moins un est chauffé, par exemple par des résistances électriques, et analogues, appropriées pour maintenir chaud le produit rôti.

16. Machine selon l'une des revendications précédentes, **caractérisée en ce que** ledit bras rotatif pour déplacer des châtaignes a une première conformation, appropriée pour communiquer aux châtaignes un mouvement de roulement durant leur déplacement.

17. Machine selon la revendication 15, **caractérisée en ce que** ledit bras rotatif pour déplacer des châtaignes a une deuxième conformation, du côté opposé au côté avec la première conformation, telle que le fait de faire tourner le bras dans une direction opposée par rapport à la rotation pour déplacer les châtaignes durant la cuisson permette de décharger les châtaignes.

18. Machine selon l'une des revendications précédentes, **caractérisée en ce que** des broches sont disposées sur des parois latérales du récipient de cuisson, de façon à améliorer la rotation du produit et la mise à niveau de celui-ci le long de couches de produit, en particulier des broches permettant une rotation desdits bras le long des deux directions, ou pouvant céder de façon élastique dans la direction de déchargement et fixes dans la direction de mélange.

19. Machine selon la revendication 18, **caractérisée en ce que** deux broches sont disposées, dont la première est proche du trou d'homme de déchargement, et dont la deuxième est dans une position élevée.

20. Machine selon l'une des revendications précédentes, **caractérisée en ce que** lesdits bras rotatifs sont revêtus d'un matériau améliorant leurs caractéristiques de traînage.

21. Machine selon l'une des revendications précédentes, **caractérisée en ce que** ladite machine procure un dispositif de commande logique programmable.

22. Machine selon l'une des revendications précédentes, **caractérisée en ce que** ledit produit est constitué par des châtaignes avec une peau incisée, ou par des châtaignes pelées, éventuellement même précuites ou congelées.
